# EUROPEAN PATENT APPLICATION

(11) **EP 4 742 314 A1**
(43) Date of publication of application: **13.05.2026**
(21) Application number: 25213367.3
(22) Date of filing: 04.11.2025
(51) Int. Cl.: H01M 4/13, H01M 10/04, H01M 10/0583, H01M 10/0587

(54) **ELECTRODE ASSEMBLY AND RECHARGEABLE BATTERY WITH THE SAME**

(30) Priority: 08.11.2024 KR 20240158337
(71) Applicant: SAMSUNG SDI CO., LTD., Yongin-si, Gyeonggi-do 17084 (KR)
(72) Inventor: MIN, Jungki, Yongin-si, 17084 (KR); HONG, Daehyun, Yongin-si, 17084 (KR); JI, Hyeongmin, Yongin-si, 17084 (KR)
(74) Representative: Maiwald GmbH

(57) **Abstract**

An electrode assembly includes a separator, a positive electrode and a negative electrode positioned with the separator therebetween and wound together with the separator. The negative electrode includes a negative substrate, a first active material layer positioned on a first surface of the negative substrate, and a second active material layer positioned on a second surface of the negative substrate. A plurality of first grooves are formed in the first active material layer. A plurality of second grooves having a different pattern from the plurality of first grooves are formed in the second active material layer.

## Description

### BACKGROUND OF THE DISCLOSURE

### (a) Field of the Disclosure

The present disclosure relates to a rechargeable battery, and to a rechargeable battery having a wound-type electrode assembly.

### (b) Description of the Related Art

Rechargeable batteries are used for a variety of purposes, including as a power source for small electronic devices such as, e.g., mobile phones and laptop computers, and as a power source for driving, e.g., motors of electric vehicles and hybrid vehicles. A rechargeable battery includes an electrode assembly and a case that accommodates and seals the electrode assembly and electrolyte in an internal space. The electrode assembly includes two electrodes (positive electrode and negative electrode) and a separator.

In order to increase the output and capacity of rechargeable batteries, increasing the energy density and loading level of electrodes may be advantageous. However, electrodes developed in this way may have the unintended side effect of reducing the impregnability of the electrolyte. When the impregnability of the electrolyte in the electrode decreases, precipitation may begin in areas where the impregnability of the electrolyte is insufficient, which may reduce the life characteristics of the rechargeable battery.

### SUMMARY

The present disclosure describes an electrode assembly and a rechargeable battery including the electrode assembly and capable of improving life characteristics by increasing the energy density and loading level of an electrode while improving the impregnability of an electrolyte.

An electrode assembly according to an aspect includes a separator, a positive electrode and a negative electrode positioned with the separator therebetween and wound together with the separator. The negative electrode includes a negative substrate, a first active material layer positioned on a first surface of the negative substrate, and a second active material layer positioned on a second surface of the negative substrate. A plurality of first grooves are formed in the first active material layer. A plurality of second grooves having a different pattern from the plurality of first grooves are formed in the second active material layer.

The first surface may face the inside of the electrode assembly, and the plurality of first grooves may be provided in a dot pattern. The plurality of first grooves may be provided in a circular dot pattern, and each of, or one or more of, the plurality of first grooves may have a width that becomes smaller as distance thereof from the negative substrate decreases. The width of each of, or one or more of, the plurality of first grooves may be in a range of approximately 20 µm to 60 µm. The depth of each of, or one or more of, the plurality of first grooves may be in a range of approximately 30 µm to 70 µm. The density of the plurality of first grooves may be in a range of approximately 100 EA/mm² to 450 EA/mm².

The second surface may face the outside of the electrode assembly, and the plurality of second grooves may be positioned in a line pattern. The plurality of second grooves may be positioned parallel to the width direction of the negative electrode and spaced apart from each other in the length direction of the negative electrode. The width of each of, or one or more of, the plurality of second grooves may be greater than the depth of each of, or one or more of, the plurality of second grooves. Each of, or one or more of, the plurality of second grooves may have a constant width, or a substantially constant width, in the thickness direction of the negative electrode. The width of each of, or one or more of, the plurality of second grooves may be in a range of approximately 40 µm to 70 µm. The depth of each of, or one or more of, the plurality of second grooves may be in a range of approximately 10 µm to 30 µm.

An electrode assembly according to another aspect includes a separator, and a positive electrode and a negative electrode positioned with the separator therebetween and wound together with the separator. The negative electrode includes a negative substrate, a first active material layer positioned on the inner surface of the negative substrate, and a second active material layer positioned on the outer surface of the negative substrate. The plurality of first grooves are formed in the first active material layer. The plurality of second grooves having a different pattern from the plurality of first grooves are formed in the second active material layer. The surface area exposed by the plurality of second grooves in the second active material layer is larger than the surface area exposed by the plurality of first grooves in the first active material layer.

The plurality of first grooves may be positioned in a dot pattern, and the second plurality of grooves may be positioned in a line pattern. The plurality of first grooves may be positioned in a circular dot pattern, and each of, or one or more of, the plurality of first grooves may have a width that becomes smaller as distance thereof from the negative substrate decreases. The width of each of, or one or more of, the plurality of first grooves may be in a range of approximately 20 µm to 60 µm. The depth of each of, or one or more of, the plurality of first grooves may be in a range of approximately 30 µm to 70 µm, and the density of the plurality of first grooves may be in a range of approximately 100 EA/mm² to 450 EA/mm².

The plurality of second grooves may be positioned in a line pattern parallel to the width direction of the negative electrode, and may be spaced apart from each other in the length direction of the negative electrode. The width of each of, or one or more of, the plurality of second grooves may be greater than the depth thereof. Each of, or one or more of, the plurality of second grooves may have a constant width, or a substantially constant width, in the thickness direction of the negative electrode. The width of each of, or one or more of, the plurality of second grooves may be in a range of approximately 40 µm to 70 µm, and the depth of each of, or one or more of, the plurality of second grooves may be in a range of approximately 10 µm to 30 µm.

The negative electrode may include a flat portion and a bent portion. The plurality of first grooves and the plurality of second grooves may be positioned at least in the bent portion. The plurality of first grooves and the plurality of second grooves may be positioned throughout the flat portion and the bent portion.

A rechargeable battery according to an aspect includes the electrode assembly with the above-described configuration, and a case that accommodates and seals the electrode assembly and an electrolyte in an internal space.

The electrode assembly may be wound around two rotation axes, and includes a central portion and a pair of bent portions positioned on both sides of the central portion. The plurality of first grooves and the plurality of second grooves may be positioned corresponding to at least one pair of bent portions. On the other hand, the electrode assembly may be wound around one rotation axis. The plurality of first grooves may be positioned throughout the first active material layer, and the plurality of second grooves may be positioned throughout the second active material layer.

According to the aspects, by forming a desired or optimal pattern of grooves in the negative active material layer, it is possible to improve the impregnability of the electrolyte and reduce or suppress the formation of precipitates in the negative electrode. The rechargeable battery according to the example embodiments may improve long-term life characteristics while maintaining a high initial discharge capacity.

### BRIEF DESCRIPTION OF THE DRAWINGS

FIG. 1 is a perspective view of an electrode assembly according to a first example embodiment.
FIG. 2 is a partial enlarged view of the electrode assembly illustrated in FIG. 1.
FIG. 3 is a schematic cross-sectional view of the electrode assembly illustrated in FIG. 1.
FIG. 4 is a partial enlarged view of FIG 3, illustrating the negative electrode.
FIG. 5 is a partial enlarged top plan view of a first active material layer of the negative electrode illustrated in FIG. 4.
FIG. 6 is a partial enlarged top plan view of a second active material layer of the negative electrode illustrated in FIG. 4.
FIG. 7 is an enlarged cross-sectional view of the negative electrode in an electrode assembly according to a second example embodiment.
FIG. 8 is a perspective view of an electrode assembly according to a third example embodiment.
FIG. 9 is a perspective view of an electrode assembly according to a fourth example embodiment.
FIG. 10 is a cross-sectional view of the electrode assembly illustrated in FIG. 9.
FIG. 11 is a partial enlarged cross-sectional view of FIG. 9, illustrating the negative electrode.
FIG. 12 is an exploded perspective view of a rechargeable battery according to an example embodiment.
FIG. 13 is a perspective view of a rechargeable battery according to another example embodiment.
FIG. 14 is a cross-sectional view of the rechargeable battery illustrated in FIG. 13.
FIG. 15 is a perspective view of a rechargeable battery according to another example embodiment.
FIG. 16 is a cross-sectional view of the rechargeable battery illustrated in FIG. 15.
FIG. 17 is a graph illustrating the life characteristics of the rechargeable battery of an example embodiment and the rechargeable batteries of Comparative Examples 1 and 2.

### DETAILED DESCRIPTION OF THE EMBODIMENTS

The present disclosure is described in detail hereinafter with reference to the accompanying drawings, in which example embodiments of the present disclosure are described. As those skilled in the art would realize, the described example embodiments may be modified in various different ways, all without departing from the scope of the present disclosure.

When the terms "about," "approximately" or "substantially" are used in this specification in connection with a numerical value, it is intended that the associated numerical value include a tolerance of ±10% around the stated numerical value. When ranges are specified, the range includes all values therebetween such as increments of 0.1%.

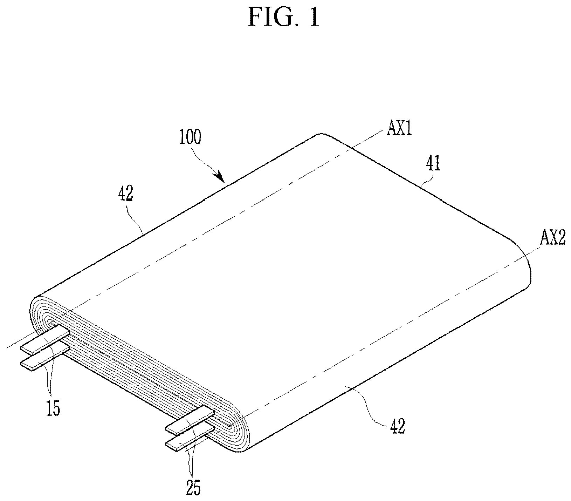

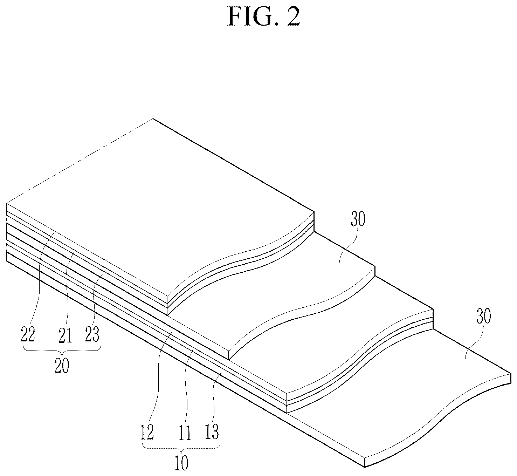

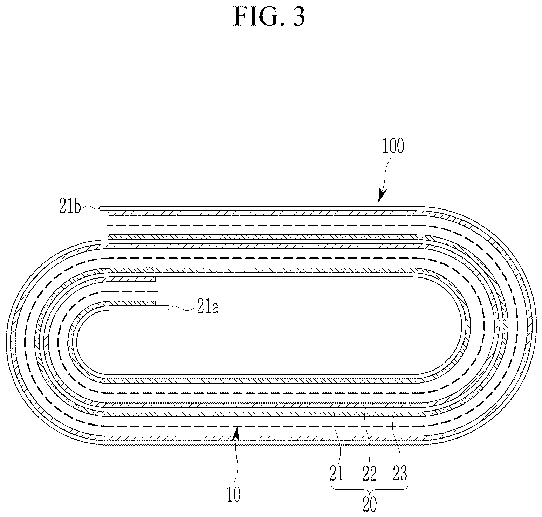

FIG. 1 is a perspective view of an electrode assembly according to a first example embodiment. FIG. 2 is a partial enlarged view of the electrode assembly illustrated in FIG. 1. FIG. 3 is a schematic cross-sectional view of the electrode assembly illustrated in FIG. 1.

Referring to FIGS. 1 to 3, an electrode assembly 100 of the example embodiment may be configured as a laminate including a positive electrode 10, a negative electrode 20, and two separators 30 wound multiple times.

Each of the positive electrode 10, the negative electrode 20 and the two separators 30 may be manufactured in a long strip shape. The laminate may have a configuration in which, for example, the negative electrode 20, the separator 30, the positive electrode 10, and the separator 30 are laminated in that order. The laminate may be wound around two rotation axes AX1 and AX2, and the electrode assembly 100 may have the shape of a flat jelly roll.

In terms of appearance, the electrode assembly 100 may include a flat quadrangular central portion 41 and the pair of bent portions 42 positioned on both sides of the central portion 41. The central portion 41 may be a flat portion of a given or desired thickness positioned between the two rotation axes AX1 and AX2. The pair of bent portions 42 may be a semicircular curved portion surrounding each of the two rotation axes AX1 and AX2.

The positive electrode 10 may include a positive substrate 11 and a pair of positive active material layers 12 and 13 positioned on both surfaces of the positive substrate 11. The negative electrode 20 may include a negative substrate 21 and a pair of negative active material layers 22 and 23 positioned on both surfaces of the negative substrate 21. The separator 30 is positioned between the positive electrode 10 and the negative electrode 20 to physically separate the positive electrode 10 and the negative electrode 20.

The positive substrate 11 may include a metal thin plate with desired or improved electrical conductivity, such as aluminum foil or aluminum mesh. The positive active material layers 12 and 13 may include a positive active material and may further include a binder and/or a conductive material. The positive substrate 11 constitutes a path for the movement of charges generated in the positive active material layers 12 and 13, and supports the positive active material layers 12 and 13. The positive substrate 11 may be referred to as a positive current collector.

The positive active material may include a lithium transition metal composite oxide. The lithium transition metal composite oxide may include, for example, at least one of a lithium-nickel oxide, a lithium-cobalt oxide, a lithium-manganese oxide, a lithium-iron phosphate compound, and a cobalt-free lithium-nickel-manganese oxide.

The negative substrate 21 may include a metal thin plate with desired or improved electrical conductivity, such as, e.g., at least one of copper foil, copper mesh, nickel foil, or nickel mesh. The negative active material layers 22 and 23 may include a negative active material and may further include a binder and/or a conductive material. The negative substrate 21 constitutes a path for the movement of charges generated in the negative active material layers 22 and 23, and supports the negative active material layers 22 and 23. The negative substrate 21 may be referred to as a negative current collector.

The negative active material may include at least one of a carbon-based active material and a silicon-based active material. The carbon-based active material may include at least one of natural graphite and artificial graphite. The silicon-based active material may include at least one of a silicon-carbon composite material, silicon oxide (SiOx, 0<x≤2), and silicon carbide (SiC).

In each of, or one or more of, the positive active material layers 12 and 13 and the negative active material layers 22 and 23, the binder may include at least one of an aqueous binder, a non-aqueous binder, and a dry binder. In each of, or one or more of, the positive active material layers 12 and 13 and the negative active material layers 22 and 23, the conductive material may include at least one of carbon-based materials such as natural graphite, artificial graphite, carbon black, carbon fibers, carbon nanofibers, and carbon nanotubes; metal materials in the form of metal powder or metal fibers including at least one of copper, nickel, aluminum, and silver; and conductive polymers such as polyphenylene derivatives.

The separator 30 may include a porous substrate or a porous substrate having a coating layer positioned on at least one surface thereof. The porous substrate may include one or more of polyethylene, polypropylene, polyethylene terephthalate, polypropylene terephthalate, polybutylene terephthalate, polyester, polycarbonate, and polyimide. The coating layer may include a binder, and the binder may include a polyvinylidene fluoride-based compound.

The positive electrode 10 may include at least one positive tab 15, and the negative electrode 20 may include at least one negative tab 25. The positive tab 15 and the negative tab 25 may extend toward one side of the electrode assembly 100. On the other hand, when the positive tab 15 extends toward one side of the electrode assembly, the negative tab 25 may extend toward the other side of the electrode assembly. FIG. 1 illustrates the first case as an example.

In FIG. 3, the illustration of the separator is omitted for convenience. In the electrode assembly 100 illustrated in FIG. 3, the negative electrode 20 may be positioned closer to the inside (winding center) of the electrode assembly 100 than the positive electrode 10. The negative electrode 20 may be positioned at the outermost part of the electrode assembly 100 at least one turn longer than the positive electrode 10.

The negative substrate 21 may include a first surface positioned toward the inside of the electrode assembly 100 and a second surface positioned toward the outside of the electrode assembly 100. A pair of negative active material layers 22 and 23 may include a first active material layer 22 positioned on the first surface and a second active material layer 23 positioned on the second surface.

The negative substrate 21 may include a first end 21a and a second end 21b disposed at both ends in the length direction (winding direction). The first end 21a may be the end on the side where winding begins and may be positioned at the innermost part of the electrode assembly 100. The second end 21b may be the end on the side where the winding ends and may be positioned at the outermost part of the electrode assembly 100.

The first active material layer 22 may be positioned at a predetermined or desired distance from the first end 21a. For example, the first active material layer 22 may be positioned apart from the first end 21a by a distance corresponding to one turn of the negative substrate 21 from the first end 21a. Since the portion corresponding to one turn from the first end 21a of the first surface of the negative substrate 21 does not face the positive electrode 10, the first active material layer 22 may not be positioned in this portion.

The second active material layer 23 may be positioned at a predetermined distance from the second end 21b. For example, the second active material layer 23 may be positioned apart from the second end 21b by a distance corresponding to one turn of the negative substrate 21 from the second end 21b. Since a portion corresponding to about one turn inward from the second end 21b of the second surface of the negative substrate 21 does not face the positive electrode 10, the second active material layer 23 may not be positioned in this portion.

The electrode assembly 100 illustrated in FIG. 3 is only an example, and the electrode assembly 100 of the present example embodiment may have various configurations other than the configuration illustrated in FIG. 3.

The electrode assembly 100 may be accommodated in the internal space of a case (not shown) together with an electrolyte. The electrolyte is a medium configured to enable the movement of lithium ions between the positive electrode 10 and the negative electrode 20, and may include at least one of a lithium salt, an organic solvent, and an additive. The separator 30 contains an electrolyte due to its porous structure and may pass lithium ions.

During the charge process, lithium ions are deintercalated from the positive active material layers 12 and 13, and intercalated into the negative active material layers 22 and 23. During the discharge process, lithium ions are deintercalated from the negative active material layers 22 and 23 and intercalated into the positive active material layers 12 and 13. The electrode assembly 100 may be configured to perform stable charge and discharge functions when the positive electrode 10, the negative electrode 20, and the separator 30 are sufficiently immersed in the electrolyte.

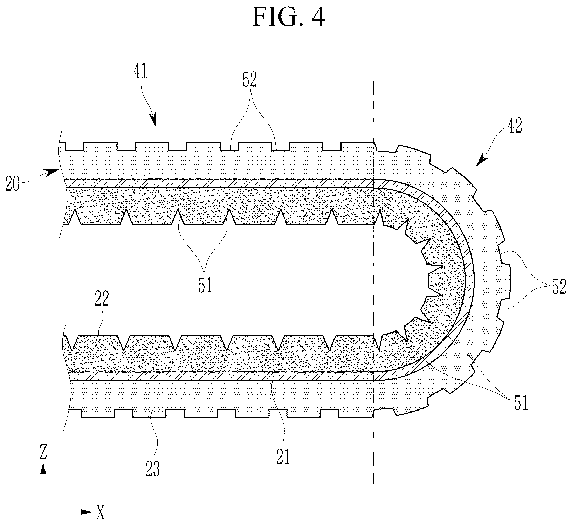

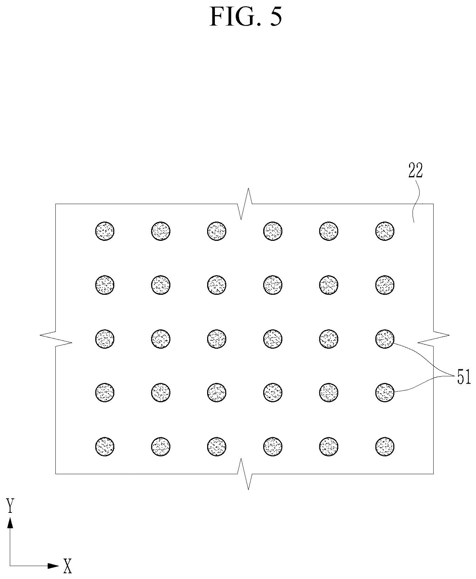

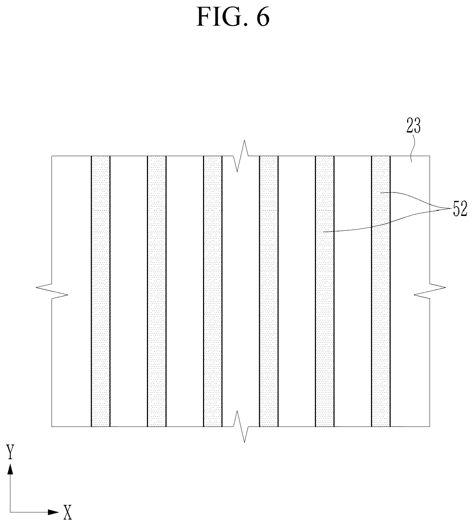

FIG. 4 is a partial enlarged view of FIG 3, illustrating the negative electrode. FIG. 5 is a partial enlarged top plan view of a first active material layer of the negative electrode illustrated in FIG. 4. FIG. 6 is a partial enlarged top plan view of a second active material layer of the negative electrode illustrated in FIG. 4.

Referring to FIGS. 4 to 6, the first and second active material layers 22 and 23 may use a material with a high energy density, and may have a thickness in a range of about 70 µm or more and a loading level in a range of about 10 mg/cm² or more. Loading level represents weight per unit area.

In general, the energy density of silicon-based active materials is approximately 10 times higher than the energy density of carbon-based active materials, but silicon-based active materials represent large volume changes during the charge and discharge process. The first and second active material layers 22 and 23 may include, for example, silicon-based active materials and carbon-based active materials in an appropriate or desired ratio to increase energy density while reducing volume change.

The first and second active material layers 22 and 23 may increase the output and capacity of the rechargeable battery by securing the above-mentioned thickness and loading level. The first and second active material layers 22 and 23 may have a surface roughness structure to increase the impregnability of the electrolyte. In general, as the thickness, filling density, and loading level of the negative active material layer increase, the impregnability of the electrolyte may decrease.

The first active material layer 22 may include a plurality of first grooves 51, and the second active material layer 23 may include a plurality of second grooves 52. The plurality of first grooves 51 span over and expand the surface area of the first active material layer 22, and the plurality of second grooves 52 span over and expand the surface area of the second active material layer 23. The plurality of first grooves 51 and the plurality of second grooves 52 provide a path for the electrolyte to be impregnated and at the same time are configured to increase the speed at which the electrolyte permeates.

The first active material layer 22 and the second active material layer 23 may improve impregnability of the electrolyte due to their surface roughness structure, and may perform more stable charge and discharge functions. In this case, the plurality of first grooves 51 and the plurality of second grooves 52 may be formed in different patterns. For example, the plurality of first grooves 51 and the plurality of second grooves 52 may be formed in a desired or optimal pattern that matches the positional characteristics of the first active material layer 22 and the second active material layer 23 to improve or maximize the function of the negative active material layers 22 and 23.

By winding the electrode assembly 100, the area where the second active material layer 23 and the positive electrode 10 face each other is larger than the area where the first active material layer 22 and the positive electrode 10 face each other. Therefore, during the charge and discharge process, intercalation and deintercalation of lithium ions may occur more actively in the second active material layer 23 than in the first active material layer 22. This can be seen as the second active material layer 23 being used somewhat more harshly than the first active material layer 22.

The plurality of first grooves 51 may be formed in a dot pattern and may be positioned at apart from each other on the surface of the first active material layer 22. For example, the plurality of first grooves 51 may be formed of or including circular dots and may be aligned at an equal distance in a first direction (X-axis direction) and a second direction (Y-axis direction) that are orthogonal to each other. The first direction (X-axis direction) may be the length direction of the negative electrode 20, and the second direction (Y-axis direction) may be the width direction of the negative electrode 20.

The plurality of first grooves 51 may be formed in various shapes, such as polygonal or oval dots in addition to circular dots. In FIG. 5, an example is illustrated in which the plurality of first grooves 51 include circular dots. The plurality of first grooves 51 may be manufactured using various methods such as needle punching or laser processing. The plurality of first grooves 51 may be manufactured with substantially the same width and substantially the same depth during the manufacturing process.

The depth of the first groove 51 may be smaller than the thickness of the first active material layer 22. The depth of the first groove 51 may be greater than the width of the first groove 51, but is not limited thereto. The first groove 51 may have a constant width, or a varying width, in a third direction (Z-axis direction). In the central portion 41, the third direction (Z-axis direction) may be the thickness direction of the negative electrode 20.

For example, when the first groove 51 is manufactured by needle punching, the first groove 51 may have a width that varies in the third direction (Z-axis direction). When the first groove is manufactured by laser processing, the first groove may have a constant width in the third direction. In FIG. 4, an example is illustrated where the width of the first groove 51 becomes smaller as distance from the negative substrate 21 decreases.

The plurality of second grooves 52 may be formed in a line pattern and may be positioned at apart from each other on the surface of the second active material layer 23. The plurality of second grooves 52 may be formed in a line pattern parallel to the second direction (Y-axis direction) and may be equally spaced in the first direction (X-axis direction). When the second groove 52 is parallel to the second direction (Y-axis direction), the width of the second groove 52 may be expanded at the bent portion 42.

The plurality of second grooves 52 may be manufactured by various methods, such as by, e.g., needle punching or laser processing. The plurality of second grooves 52 may be manufactured with substantially the same width and substantially the same depth during the manufacturing process. The depth of the second groove 52 may be smaller than the thickness of the second active material layer 23. The width of the second groove 52 may be greater than the depth of the second groove 52, but is not limited thereto.

The second groove 52 may have a constant width or a varying width in the third direction (Z-axis direction). For example, when the second groove is manufactured by needle punching, the second groove may have a width that varies in the third direction (Z-axis direction). When the second groove 52 is manufactured by laser processing, the second groove 52 may have a constant width in the third direction (Z-axis direction). In FIG. 4, an example is illustrated in which the second groove 52 has a constant, or substantially constant, width.

The width of the first groove 51 located at the bent portion 42 may be different from the width of the first groove 51 located at the central portion 41. Since the first active material layer 22 is bent inward at the bent portion 42, the width of the first groove 51 positioned at the bent portion 42 may be smaller than the width of the first groove 51 positioned at the central portion 41.

The width of the second groove 52 positioned at the bent portion 42 may be different from the width of the second groove 52 positioned at the central portion 41. Since the second active material layer 23 is bent outward at the bent portion 42, the width of the second groove 52 positioned at the bent portion 42 may be larger than the width of the second groove 52 positioned at the central portion 41. The second groove 52 having an enlarged width at the bent portion 42 may further widen the impregnation path of the electrolyte and increase the speed at which the electrolyte is impregnated.

Due to the difference in the pattern of the first groove 51 and the second groove 52 described above, the area (or dimension) of the surface area exposed by the plurality of second grooves 52 in the second active material layer 23 (e.g., the area occupied by the plurality of second grooves 52) may be larger than the area (or dimension) of the surface area exposed by the plurality of first grooves 51 in the first active material layer 22 (e.g., the area occupied by the plurality of first grooves 51). In other words, the surface area of the second active material layer 23 per unit area of the negative substrate 21 may be greater than the surface area of the first active material layer 22 per unit area of the negative substrate 21.

The electrode assembly 100 of the present example embodiment may increase the surface area of the second active material layer 23, which is used somewhat more harshly than the first active material layer 22, to be larger than the surface area of the first active material layer 22. Therefore, it is possible to facilitate the intercalation and deintercalation of lithium ions by the reaction with the positive electrode 10 throughout the second active material layer 23, and effectively reduce or suppress the formation of precipitates in the second active material layer 23.

In general, the bent portion of the electrode assembly may have a lower impregnability of the electrolyte than the central portion due to the strong tensile force generated during the winding process, and as a result, precipitates may be more readily formed at the bent portion.

The electrode assembly 100 of the present example embodiment may expand the width of the second groove 52 at the bent portion 42 by the line pattern of the second groove 52, and by using the second groove 52, the impregnation path of the electrolyte at the bent portion 42 may be expanded while at the same time increasing the speed at which the electrolyte is impregnated. Accordingly, it is possible to improve impregnability of the electrolyte of the second active material layer 23 at the bent portion 42, and effectively reduce or suppress the formation of precipitates at the bent portion 42.

In the electrode assembly 100 of the above-described configuration, for example, the width (diameter) of the first groove 51 may be in a range of approximately 20 µm to 60 µm, and the depth of the first groove 51 may be in a range of approximately 30 µm to 70 µm. The density of the plurality of first grooves 51 may be in a range of approximately 100 EA/mm² to 450 EA/mm². Here, EA represents the number of grooves.

When the width (diameter) of the first groove 51 is less than about 20 µm, or the depth of the first groove 51 is less than about 30 µm, or when the density of the plurality of first grooves 51 is less than about 100 EA/mm², the effect of expanding the surface area of the first active material layer 22 may be insufficient, and thus the effect of improving the impregnability of the electrolyte may be low.

When creating the plurality of first grooves 51 by needle punching, when the width (diameter) of the first grooves 51 exceeds about 60 µm, the depth of the first grooves 51 exceeds about 70 µm, or the density of the plurality of first grooves 51 exceeds about 450 EA/mm², the rigidity of the needles decreases as the punching process repeats, and thus breakage of the needles may occur during the process of creating the plurality of first grooves 51, which may lead to a defective pattern of the first grooves 51.

When creating the plurality of first grooves 51 by laser irradiation, when the width (diameter) of the first grooves 51 exceeds about 60 µm, or the depth of the first grooves 51 exceeds about 70 µm, or the density of the plurality of first grooves 51 exceeds about 450 EA/mm², the active material may be substantially or excessively removed by the laser, resulting in a phenomenon in which the loading level of the first active material layer 22 is lowered.

The width of the second groove 52 may be greater than the depth of the second groove 52. As the depth of the second groove 52 increases, multiple overlapping processes must be performed using a high-powered laser, which may damage the second active material layer 23 by high laser heat.

For example, the width of the second groove 52 may be in a range of approximately 40 µm to 70 µm, and the depth of the second groove 52 may be in a range of approximately 10 µm to 30 µm. And the gap between two adjacent second grooves 52 may be in a range of approximately 1.0 mm to 1.8 mm.

When the width of the second groove 52 is less than about 40 µm or the depth of the second groove 52 is less than about 10 µm, the effect of expanding the surface area of the second active material layer 23 may be insufficient, and thus the effect of improving the impregnability of the electrolyte may be low. When the width of the second groove 52 exceeds about 70 µm or the depth of the second groove 52 exceeds about 30 µm, the active material may be substantially or excessively removed by the laser, which may lower the loading level of the second active material layer 23, and the second active material layer 23 may be damaged by the high-energy laser.

The negative electrode 20 of the above-described configuration may be manufactured, for example, by a process of applying a negative active material slurry to the first surface and the second surface of the negative substrate 21, drying and compressing the applied negative active material slurry to form the first active material layer 22 and the second active material layer 23, patterning the plurality of first grooves 51 on the first active material layer 22, patterning the plurality of second grooves 52 on the second active material layer 23, and slitting the negative substrate 21 and the first and second active material layers 22 and 23.

For example, the plurality of first grooves 51 may be manufactured by needle punching, and the plurality of second grooves 52 may be manufactured by laser processing. Since laser processing may be applied to a stationary negative electrode or a negative electrode being transported at low speed, the process speed of the negative electrode may be somewhat reduced. On the other hand, needle punching may be applied to negative electrodes being transported in roll-to-roll equipment, so that the process speed of the negative electrodes may be kept high.

When patterning the plurality of first grooves 51 and the plurality of second grooves 52, by appropriately combining needle punching and laser processing, it is possible to obtain the effect of surface roughening processing of the negative electrode 20 while decreasing or minimizing the decrease in process speed of the negative electrode 20.

The negative electrode 20 may then form a laminate together with the positive electrode 10 and the two separators 30, and may be wound around the two rotation axes AX1 and AX2. The plurality of first grooves 51 may be positioned throughout the first active material layer 22, and the plurality of second grooves 52 may be positioned throughout the second active material layer 23. That is, the plurality of first grooves 51 and the plurality of second grooves 52 may be positioned throughout the central portion 41 and the pair of bent portions 42.

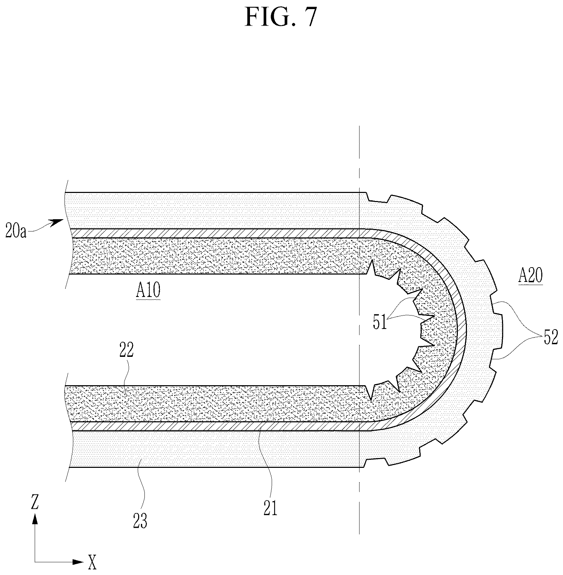

FIG. 7 is an enlarged cross-sectional view of the negative electrode in an electrode assembly according to the second embodiment.

Referring to FIG. 7, the electrode assembly of the second example embodiment has a configuration identical or similar to the configuration of the first example embodiment described above, with a difference that the plurality of first grooves 51 and the plurality of second grooves 52 are positioned in the bent portion 42, or are positioned only in the bent portion 42.

A negative electrode 20a may be divided into a plurality of first regions A10 corresponding to the central portion 41 (see FIGS. 1 and 7) and a plurality of second regions A20 corresponding to the pair of bent portions 42 (see FIGS. 1 and 7). The first region A10 illustrated in FIG. 7 is a flat portion of the negative electrode 20a, and the second region A20 is a bent portion of the negative electrode 20a. In FIG. 7, two first regions A10 and one second region A20 are enlarged and illustrated.

The plurality of first grooves 51 may be positioned in the second region A20 of the first active material layer 22, and the plurality of second grooves 52 may be positioned in the second region A20 of the second active material layer 23. The negative electrode 20a may increase the impregnability of the electrolyte by the plurality of first grooves 51 and the plurality of second grooves 52 in the plurality of second regions A20 corresponding to the bent portion 42, and may effectively reduce or suppress the formation of precipitates in the bent portion 42.

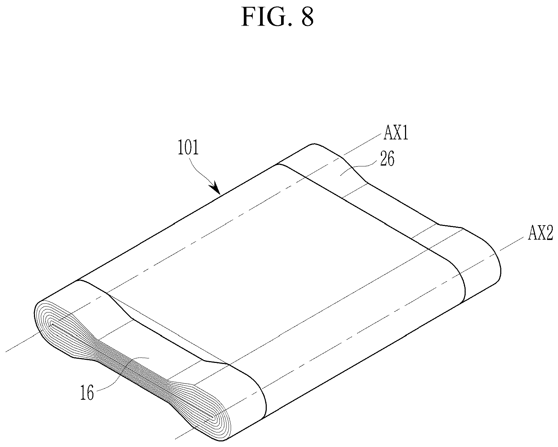

FIG. 8 is a perspective view of an electrode assembly according to a third example embodiment.

Referring to FIG. 8, an electrode assembly 101 of the third example embodiment has a configuration that is substantially identical or similar to the configuration of either the first or second example embodiments described above, with a difference for the shapes of a positive tab 16 and a negative tab 26.

The positive tab 16 may be or include a portion of one edge of the positive substrate that is not covered with a positive active material layer. The negative tab 26 may be or include a portion of one edge of the negative substrate that is not covered with a negative active material layer. The positive tab 16 and the negative tab 26 may be positioned on opposite sides of the electrode assembly 101.

At least a portion of the positive tab 16 may be compressed by a pressure and affixed integrally by a method such as, e.g., welding. At least some of the negative tab 26 may be compressed by pressure and affixed integrally by a method such as, e.g., welding.

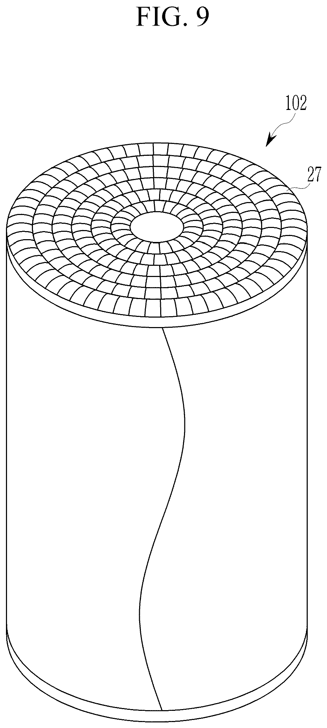

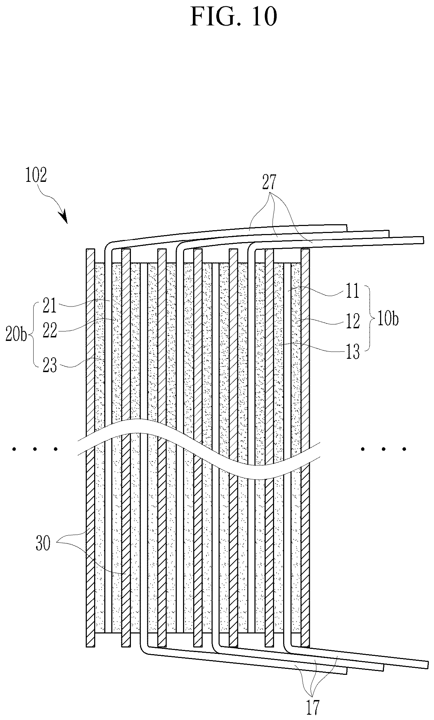

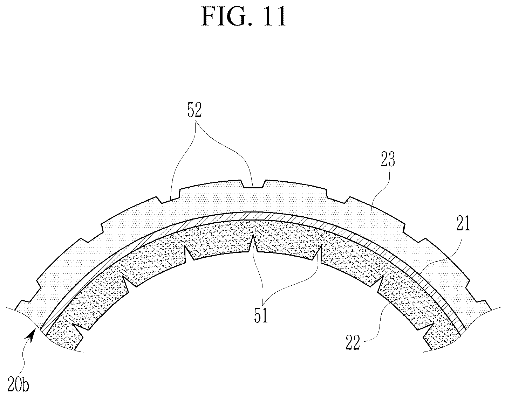

FIG. 9 is a perspective view of an electrode assembly according to a fourth example embodiment. FIG. 10 is a cross-sectional view of the electrode assembly illustrated in FIG. 9. FIG. 11 is a partial enlarged cross-sectional view of FIG. 9, illustrating the negative electrode.

Referring to FIGS. 9 to 11, an electrode assembly 102 of the fourth example embodiment has a configuration that is substantially identical or similar to the configuration of the first example embodiment described above, except that the laminate is wound around one rotation axis. During the process of winding the laminate, a center pin (not shown) may constitute a rotation axis. The center pin may remain in the electrode assembly 102, or may be removed from the electrode assembly 102 after winding of the laminate.

A positive tab 17 may extend toward one side (e.g., the lower side) of the electrode assembly 102, and a negative tab 27 may extend toward the opposite side (e.g., the upper side) of the electrode assembly 102. A plurality of cut lines may be positioned on the positive tab 17 and the negative tab 27. The positive tab 17 may be folded inward toward the center of the electrode assembly 102, and the negative tab 27 may also be folded inward toward the center of the electrode assembly 102.

The plurality of first grooves 51 may be formed in the first active material layer 22 of a negative electrode 20b, and the plurality of second grooves 52 may be formed in the second active material layer 23 of the negative electrode 20b. The plurality of first grooves 51 may be positioned on some or all of the first active material layer 22. The plurality of second grooves 52 may be parallel to the width direction (vertical direction based on the drawing) of the negative electrode 20b and may be positioned on some or all of the second active material layer 23.

The negative electrode 20b may increase the impregnability of the electrolyte by the plurality of first grooves 51 and the plurality of second grooves 52, and may effectively reduce or suppress the formation of precipitates. Further, the second active material layer 23, which is used somewhat more harshly than the first active material layer 22, may further increase the impregnability of the electrolyte by the line pattern of the second grooves 52. In the drawing of FIG. 10, 10b represents the positive electrode.

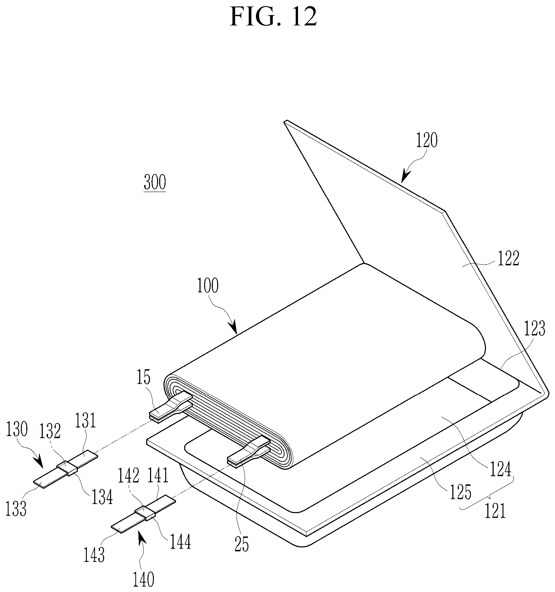

FIG. 12 is an exploded perspective view of a rechargeable battery according to an example embodiment.

Referring to FIG. 12, a rechargeable battery 300 according to the present example embodiment may include the electrode assembly 100 and a pouch-type case 120 configured to accommodate and seal the electrode assembly 100 and the electrolyte in an internal space. The electrode assembly 100 may be the electrode assembly of the first example embodiment or the second example embodiment described above.

The case 120 may include a first case 121 covering one side (the lower side based on FIG. 12) of the electrode assembly 100, and a second case 122 covering the opposite side (the upper side based on FIG. 12) of the electrode assembly 100. The first case 121 and the second case 122 may be connected, e.g., integrally connected, and a folding line 123 may be positioned between the first case 121 and the second case 122. A recessed portion 124 configured to accommodate the electrode assembly 100 may be positioned in the first case 121.

The electrode assembly 100 may be accommodated in the recessed portion 124 when the second case 122 is unfolded (opened) with respect to the first case 121, and the second case 122 may be folded to cover the electrode assembly 100. The three edges of the first case 121 and the second case 122, excluding the folding line 123, may be bonded to each other by, e.g., heat fusion, to form a sealing portion 125.

The rechargeable battery 300 may include first and second strip terminals 130 and 140 made of or including solid metal rods. The first strip terminal 130 may include an inner portion 131 affixed to the positive tab 15, a middle portion 132 overlapping the sealing portion 125 of the case 120, and an outer portion 133 exposed to the outside of the case 120. The second strip terminal 140 may include an inner portion 141 affixed to the negative tab 25, a middle portion 142 overlapping the sealing portion 125 of the case 120, and an outer portion 143 exposed to the outside of the case 120.

The first and second strip terminals 130 and 140 are external terminals that may be connected to an external device (not shown) and that may electrically connect the electrode assembly 100 to the external device. Because the sealing portion 125 of the case 120 has a weak adhesion to the metal, insulating films 134 and 144 may surround the middle portions 132 and 142 to increase the adhesive strength of the first and second strip terminals 130 and 140 to the case 120. The insulating films 134 and 144 may be made of or include a polymer resin having a lower melting point than the sealing portion 125 of the case 120.

The internal temperature and internal pressure of the rechargeable battery 300 may rapidly increase due to various causes such as, e.g., rapid charge and discharge, external impact, and exposure to a high-temperature environment. In this case, the insulating films 134 and 144 may melt before the sealing portion 125 of the case 120, thereby releasing gas inside the case 120. The insulating films 134 and 144 may thus constitute a safety vent to discharge gas and reduce or prevent rapid destruction of the rechargeable battery 300.

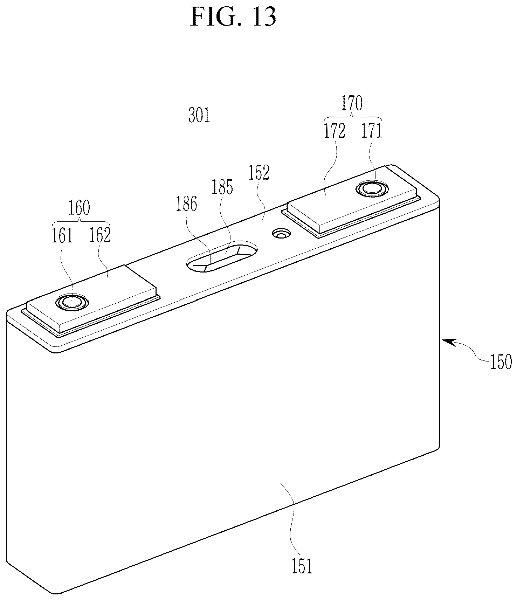

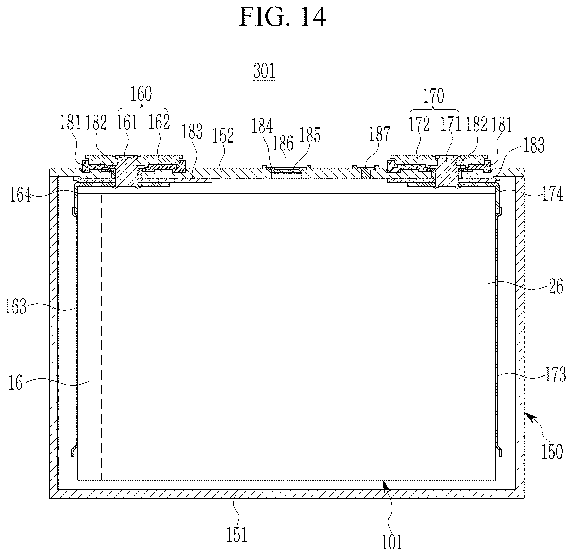

FIG. 13 is a perspective view of a rechargeable battery according to another example embodiment. FIG. 14 is a cross-sectional view of the rechargeable battery illustrated in FIG. 13.

Referring to FIGS. 13 and 14, a rechargeable battery 301 according to the present example embodiment may include the electrode assembly 101 and a case 150 configured to accommodate and seal the electrode assembly 101 and the electrolyte in an internal space. The electrode assembly 101 may be the electrode assembly of the third example embodiment described above. The case 150 may have a roughly rectangular shape, and the rechargeable battery 301 of the present example embodiment may be, e.g., a square rechargeable battery.

The case 150 may include a can 151 having a recessed internal space and one side open, and a cap plate 152 coupled to the can 151 to seal the can 151. The can 151 may be made of or include a high-strength metal such as, e.g., stainless steel. A positive terminal 160, a negative terminal 170, and a safety vent 185 may be installed on the cap plate 152.

The positive terminal 160 may include a first rivet 161 and a first terminal plate 162, and may be electrically connected to the positive electrode by a first current collector 163 and a first connector 164. The first current collector 163 may be coupled to the positive tab 16, for example, by welding. The negative terminal 170 may include a second rivet 171 and a second terminal plate 172, and may be electrically connected to the negative electrode by a second current collector 173 and a second connector 174. The second current collector 173 may be coupled to the negative tab 26, for example, by welding.

Each of the positive terminal 160 and the negative terminal 170 may be insulated from the cap plate 152 by an upper insulator 181, a seal gasket 182, and a lower insulator 183. The seal gasket 182 may substantially prevent external moisture from penetrating into the case 150, and the electrolyte inside the case 150 from leaking to the outside of the rechargeable battery 301.

A vent hole 184 may be positioned in the cap plate 152, and the safety vent 185 may be installed in the vent hole 184 of the cap plate 152. The safety vent 185 may be a metal plate having a thickness that is smaller than the thickness of the cap plate 152, and may include a notch 186 that fractures at a predetermined or desired pressure to relieve internal pressure. A plug 187 may seal an injection port of the electrolyte provided in the cap plate 152.

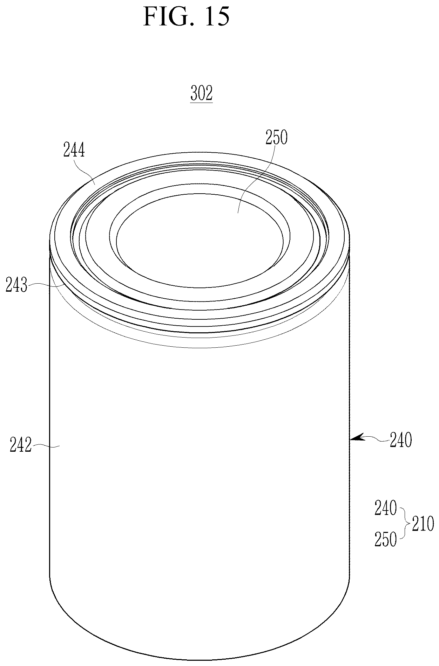

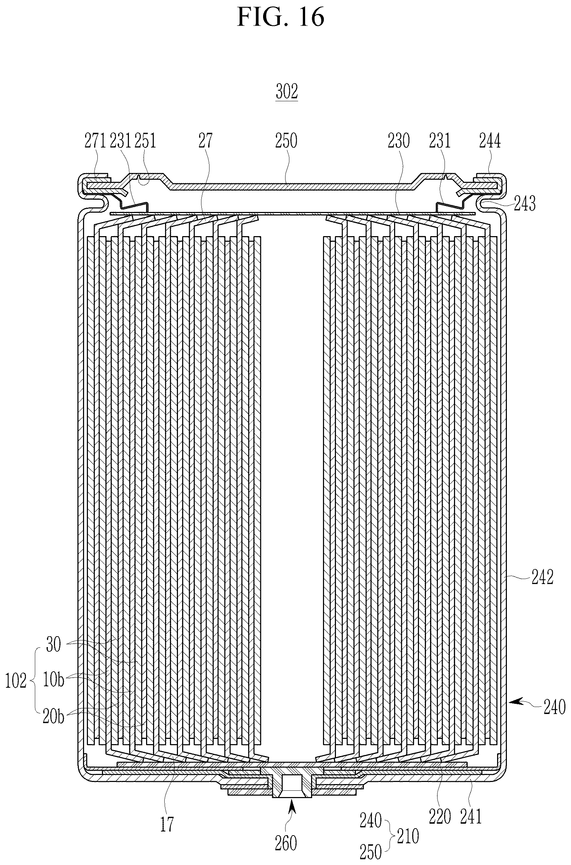

FIG. 15 is a perspective view of a rechargeable battery according to another example embodiment. FIG. 16 is a cross-sectional view of the rechargeable battery illustrated in FIG. 15.

Referring to FIGS. 15 and 16, a rechargeable battery 302 according to the present example embodiment may include the electrode assembly 102 and a case 210 configured to accommodate and seal the electrode assembly 102 and the electrolyte in an internal space. The electrode assembly 102 may be the electrode assembly of the fourth example embodiment described above. The case 210 may be approximately cylindrical, and the rechargeable battery 302 of the present embodiment may be a cylindrical rechargeable battery.

A positive current collecting plate 220 may be positioned on one side (e.g., the lower side) of the electrode assembly 102, and a negative current collecting plate 230 may be positioned on the opposite side (e.g., the upper side) of the electrode assembly 102. The positive current collecting plate 220 may be affixed to the positive tab 17, and the negative current collecting plate 230 may be affixed to the negative tab 27.

The case 210 may include a can 240 having a recessed internal space and one side open, and a cap plate 250 coupled to the can 240 to seal the can 240. The can 240 may include a bottom portion 241 and a side portion 242 connected to an edge of the bottom portion 241. The bottom portion 241 may be referred to as a top portion when the rechargeable battery 302 is upside down.

A beading portion 243 and a crimping portion 244 may be provided on the side portion 242. The beading portion 243 may be concavely deformed toward the inside of the case 210, and the crimping portion 244 may be a portion in which the end of the side portion 242 is bent toward the inside of the case 210. The electrode assembly 102, the positive current collecting plate 220 and the negative current collecting plate 230 may be accommodated in the space between the bottom portion 241 and the beading portion 243, and the beading portion 243 may reduce or suppress movement inside the can 240.

A terminal hole may be positioned in the center of the bottom portion 241, and a terminal portion 260 may be installed in the terminal hole via an insulator. The terminal portion 260 may be coupled to the positive current collecting plate 220 and may constitute a positive terminal. The negative current collecting plate 230 may include a plurality of connectors 231. The plurality of connectors 231 may be affixed to the inner surface of the beading portion 243, and the can 240 may constitute a negative terminal.

The cap plate 250 may be positioned on the outside of the negative current collecting plate 230, and the edge of the cap plate 250 may be affixed between the beading portion 243 and the crimping portion 244 via an insulating gasket 271. The cap plate 250 may be electrically non-polar. A notch 251 may be positioned on one surface of the cap plate 250 and configured to fracture at a predetermined or desired pressure and relieves internal pressure.

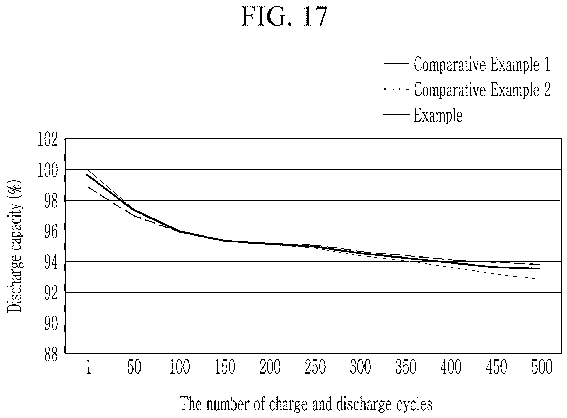

FIG. 17 is a graph illustrating the life characteristics of the rechargeable battery of the example and the rechargeable batteries of Comparative Examples 1 and 2. In FIG. 17, the horizontal axis represents the number of charge and discharge cycles, and the vertical axis represents the discharge capacity (%).

The rechargeable battery of the example includes the electrode assembly of the first example embodiment. The rechargeable battery of Comparative Example 1 includes an electrode assembly in which the plurality of first grooves are provided in the first and second active material layers. The rechargeable battery of Comparative Example 2 includes an electrode assembly in which the plurality of second grooves are provided in the first and second active material layers.

In the example and Comparative Examples 1 and 2, the plurality of first grooves are provided with the same shape, the same size, and the same gap, and the plurality of second grooves are provided with the same shape, the same size, and the same gap. The rechargeable batteries of the example and Comparative Examples 1 and 2 have the above-described configuration except for the pattern shape of the negative electrode.

Referring to FIG. 17, the rechargeable battery of Comparative Example 1 has desired or improved initial discharge capacity, but as the number of cycles increases, the discharge capacity rapidly decreases, resulting in the lowest long-term life characteristics. The rechargeable battery of Comparative Example 2 has desired or improved long-term life characteristics, but shows the lowest discharge capacity during initial operation before 150 cycles. On the other hand, the rechargeable battery of the example shows desired or improved long-term life characteristics while maintaining a high initial discharge capacity.

## Claims

1. An electrode assembly, comprising:
a separator (30); and
a positive electrode (10) and a negative electrode (20) positioned with the separator (30) therebetween and wound together with the separator (30),
wherein the negative electrode (20) includes a negative substrate (21), a first active material layer (22) positioned on a first surface of the negative substrate (21), and a second active material layer (23) positioned on a second surface of the negative substrate (21),
a plurality of first grooves (51) are formed in the first active material layer (22),
and a plurality of second grooves (52) having a different pattern from the plurality of first grooves (51) are formed in the second active material layer (23).

2. The electrode assembly as claimed in claim 1, wherein:
the first surface faces the inside of the electrode assembly,
and the plurality of first grooves (51) are positioned in a dot pattern.

3. The electrode assembly as claimed in claim 2, wherein:
the plurality of first grooves (51) are positioned in a circular dot pattern,
and one or more of the plurality of first grooves (51) has a width that becomes smaller as a distance thereof from the negative substrate decreases.

4. The electrode assembly as claimed in claim 2 or 3, wherein:
the width of one or more of the plurality of first grooves (51) is in a range of approximately 20 µm to 60 µm,
the depth of one or more of the plurality of first grooves (51) is in a range of approximately 30 µm to 70 µm,
and the density of the plurality of first grooves (51) is in a range of approximately 100 EA/mm² to 450 EA/mm².

5. The electrode assembly as claimed in any one of the preceding claims, wherein:
the second surface faces the outside of the electrode assembly,
and the plurality of second grooves (52) are positioned in a line pattern.

6. The electrode assembly as claimed in claim 5, wherein the plurality of second grooves (52) are positioned parallel to the width direction of the negative electrode (20) and at a distance from each other in the length direction of the negative electrode (20).

7. The electrode assembly as claimed in claim 5 or 6, wherein:
the width of one or more of the plurality of second grooves (52) is greater than the depth thereof, and
one or more of the plurality of second grooves (52) has a substantially constant width in the thickness direction of the negative electrode (20).

8. The electrode assembly as claimed in any one of the claims 5 to 7, wherein:
the width of one or more of the plurality of second grooves (52) is in a range of approximately 40 µm to 70 µm, and
the depth of one or more of the plurality of second grooves (52) is in a range of approximately 10 µm to 30 µm.

9. An electrode assembly, comprising:
a separator (30); and
a positive electrode (10) and a negative electrode (20) positioned with the separator (30) therebetween and wound together with the separator (30),
wherein the negative electrode (20) includes a negative substrate (21), a first active material layer (22) positioned on the inner surface of the negative substrate (21), and a second active material layer (23) positioned on the outer surface of the negative substrate (21),
a plurality of first grooves (51) are formed in the first active material layer (22),
a plurality of second grooves (52) having a different pattern from the plurality of first grooves (51) are formed in the second active material layer (23),
and the surface area exposed by the plurality of second grooves (52) in the second active material layer (23) is larger than the surface area exposed by the plurality of first grooves (51) in the first active material layer (22).

10. The electrode assembly as claimed in claim 9, wherein:
the plurality of first grooves (51) are positioned in a dot pattern,
and the plurality of second grooves (52) are positioned in a line pattern.

11. The electrode assembly as claimed in claim 10, wherein the plurality of second grooves (52) are positioned in a line pattern parallel to the width direction of the negative electrode (20), and are spaced apart from each other in the length direction of the negative electrode (20).

12. The electrode assembly as claimed in any one the claims 1 to 11, wherein:
the negative electrode (20) comprises a flat portion and a bent portion (42),
and the plurality of first grooves (51) and the plurality of second grooves (52) are positioned at least in the bent portion (42).

13. The electrode assembly as claimed in claim 12, wherein the plurality of first grooves (51) and the plurality of second grooves (52) are positioned throughout the flat portion and the bent portion (42).

14. A rechargeable battery, comprising:
the electrode assembly according to any one of the claims 1 to 13; and
a case (120) configured to accommodate and seal the electrode assembly and electrolyte in an internal space.

15. The rechargeable battery as claimed in claim 14, wherein:
the electrode assembly is wound around two rotation axes and comprises a central portion (41) and a pair of bent portions (42) positioned on both sides of the central portion (41),
and the plurality of first grooves (51) and the plurality of second grooves (52) are positioned at least at one pair of bent portions (42).
